# DEMANDE DE BREVET EUROPEEN

(11) **EP 1 259 089 A1**
(43) Date de publication de la demande: **20.11.2002**
(21) Numéro de dépôt: 02291136.6
(22) Date de dépôt: 06.05.2002
(51) Int. Cl.: H04Q 7/32

(54) **Procédé de gestion des données stockées dans la mémoire d'une carte sim d'un équipement mobile**

(30) Priorité: 14.05.2001 FR 0106306
(71) Demandeur: ALCATEL, 75008 Paris (FR)
(72) Inventeur: Thil, Hervé, 92100 Boulogne (FR); Augui, Stéphane, 75011 Paris (FR); Tricoche, Marc, 74320 Sevrier (FR); Fu, Danbin, Shanghai (CN)
(74) Mandataire: Korakis-Ménager, Sophie

(57) **Abrégé**

La présente invention concerne un procédé de gestion des données stockées dans la mémoire d'une carte SIM d'un équipement mobile comprenant un terminal de radiocommunication équipé d'une telle carte, selon lequel au moins une structure de données est créée en fonction desdites données.

Cette structure (SD) est stockée dans une zone de mémoire du terminal, et indexée selon lesdites données de la carte SIM.

## Description

L'invention concerne un procédé de gestion des données stockées dans la mémoire d'une carte SIM (en anglais « Suscriber Identity Module », module d'identité de l'abonné) d'un équipement mobile, en particulier un téléphone mobile.

Elle se rapporte plus précisément à un procédé de gestion des données stockées dans la mémoire d'une carte SIM d'un équipement mobile comprenant un terminal de radiocommunication équipé d'une telle carte, selon lequel au moins une structure de données est créée en fonction desdites données.

Il est connu de gérer les données stockées dans la mémoire de la carte SIM directement par une structure également stockée dans la mémoire de la carte SIM. Cependant cette mémoire étant limitée se posent des problèmes d'encombrement nécessitant par exemple la compression des données stockées dans la mémoire de la carte SIM afin d'augmenter la capacité de stockage de cette dernière comme divulgué dans le document de brevet GB 2 317 246.

La carte SIM contient essentiellement des informations basiques telles que les numéros de téléphone et les noms des correspondants mais ne permet pas l'enregistrement de données additionnelles du type catégories ou familles de numéros.

La présente invention résoud ce problème et, pour ce faire, selon le procédé conforme à l'invention, ladite structure est stockée dans une zone de mémoire du terminal, cette structure de données étant indexée selon lesdites données de la carte SIM.

Ce procédé présente un avantage : il évite toute duplication des données de la mémoire de la carte SIM et limite donc l'encombrement de mémoire nécessaire.

Selon le mode de réalisation préféré, ladite structure de données est gérée dans ladite mémoire et organise les données stockées dans la carte SIM, cette structure comportant une liaison avec les identifiants enregistrés du module d'identité SIM et pour chacun de ceux-ci des informations additionnelles.

Avantageusement, ladite structure de données comporte des identifiants indexés selon lesdites données de la carte SIM, et parmi celles-ci les noms classés par ordre alphabétique et leurs items SIM étant associés ainsi que d'autres identifiants.

De préférence, ces identifiants sont :
- Item « nouvelle donnée » : code selon qu'il s'agisse de la même donnée SIM ou d'une nouvelle donnée ;
- Item « famille » : idenfifiant associé au nom : codes pour privé, pour professionnel, pour autre, pour non classé ;
- Item « dernier appel » : marquage du dernier numéro appelé avec la carte : codes pour non ou oui ;
- Item « catégorie » : identifiant associé aux différents numéros associés à un même nom : codes pour domicile, pour mobile, pour bureau ou pour réservé.

Avantageusement, un programme de vérification de la cohérence est mis en fonction lorsqu'un déplacement de la carte SIM est détecté.

La structure de données étant enregistrée dans la mémoire de l'équipement, il est nécessaire de la réactualiser en fonction de modifications des données de la carte SIM; c'est le cas par exemple quand la carte SIM est enlevée de son équipement pour être utilisée sur un autre équipement et ses données en conséquence modifiées ; il faut alors lors de sa réinstallation sur l'équiment d'origine réindexer la structure de données.

De préférence, ledit programme de vérification lit tous les enregistrements du fichier SIM et vérifie si l'entrée existe ou non dans ladite structure de données, la structure de données étant modifiée pour être en concordance avec le fichier SIM.

Plus précisément, ce programme de vérification comprend la création d'une structure de données temporaire destinée à remplacer ladite structure de données, une fois toutes les données traitées.

Avantageusement, cette structure de données temporaire est construite par comparaison de ses items SIM et des items SIM de ladite structure de données, par initialisation des items par défaut, par lecture des items « nouvelle donnée » et par comparaison des noms et items associés.

L'invention concerne également un équipement mobile comprenant un terminal de radiocommunication équipé d'une carte SIM, des données étant stockées dans une mémoire de la carte SIM, caractérisé en ce qu'il comporte :
- des moyens pour créer au moins une structure de données relative auxdites données de la carte SIM, dans une zone de mémoire du terminal de radiocommunication, et
- des moyens d'indexation de cette structure de données (SD) selon lesdites données de la carte SIM.

D'autres caractéristiques de l'invention apparaîtront à la lecture de la description suivante.

L'invention est décrite ci-après plus en détail à l'aide de figures ne représentant que des exemples de réalisation.

La figure 1 est un tableau représentant l'état des identifiants enregistrés dans une carte SIM.

La figure 2 est un tableau représentant l'état des identifiants enregistrés dans une structure de données mémorisée dans l'appareil.

La figure 3 est un tableau représentant l'état des identifiants de la carte SIM après modification.

La figure 4 est un tableau représentant l'état des identifiants enregistrés dans une structure de données temporaire mémorisée dans l'appareil lors du programme de vérification.

De façon classique, les données stockées dans la mémoire de la carte SIM comporte jusqu'à 255 données comprenant des noms et des numéros d'appel associés à ces noms, données entrées par l'utilisateur dans un ordre aléatoire.

Le principe de l'invention est de gérer les informations additionnelles dans la mémoire du terminal, par exemple un téléphone mobile, et d'exécuter un programme de vérification de la cohérence lorsqu'une carte SIM est insérée.

Une ou plusieurs structures de données sont gérées dans ladite mémoire et organisent les données stockées dans la carte SIM. Elles comportent une liaison avec les identifiants enregistrés du module d'identité SIM et pour chacun de ceux-ci des informations additionnelles.

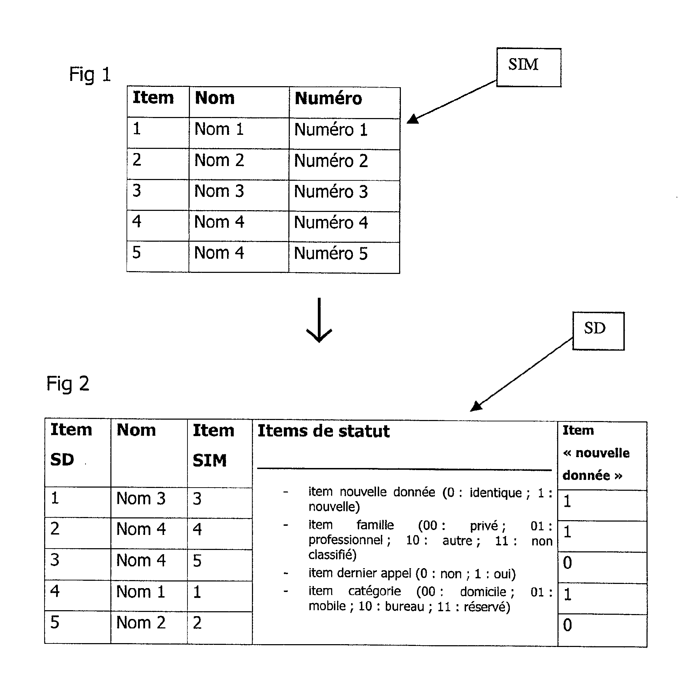

Ces identifiants enregistrés du module d'identité SIM se présentent sous la forme du tableau représenté en figure 1. Ils sont constitués de la liste des items SIM (numéros d'ordre d'entrée des données), des noms et numéros de téléphone associés.

Dans un premier temps, une première structure de données de type RDM (en anglais Rémanent Data Memory) enregistrée dans la mémoire de l'appareil peut être qualifiée de structure «famille». Les caractéristiques de chaque famille, une famille d'appels consistant en trois numéros possibles pour un nom, sont les suivants :
- Identifiant d'activation : Yes/No Il indique si la structure doit être utilisée ou non, c'est-à-dire si l'appareil mobile est dans un mode de gestion de familles ou non ; la valeur par défaut est No ;
- IMSI (identifiant caractérisant la carte SIM)
- Identifiant de catégorie : 0 pour privé, 1 pour professionnel et 2 pour autres
- Identifiant de mélodie
- Restriction d'appels : Yes/No (par exemple, ne recevoir que les appels d'une catégorie).

Cette première structure de données est spécifiquement liée à la constitution des familles.

Une seconde structure de données SD également de type RDM enregistrée dans la mémoire de l'appareil est constituée en fonction des données de la carte SIM et destinée à gérer lesdites données. Si l'on considère les données du tableau 1, les noms i sont ici classés par ordre alphabétique et leurs items SIM sont associés. Divers identifiants additionnels, ici appelés items de statut, leur sont également associés. Ceci peut se schématiser par le tableau de données obtenu en figure 2.

Plus précisément, les identifiants sont les suivants :
- Item « nouvelle donnée » : 0 s'il s'agit de la même donnée SIM, 1 s'il s'agit d'une nouvelle donnée ;
- Item « famille » : identifiant associé au nom : 00 pour privé, 01 pour professionnel, 11 pour autre, 11 pour non classé ;
- Item « dernier appel » : marquage du dernier numéro appelé avec la carte : 0 pour non, 1 pour oui ;
- Item « catégorie » : identifiant associé aux différents numéros associés à un même nom : 00 pour domicile, 01 pour mobile, 10 pour bureau, 11 pour réservé.

De plus, un mot d'un byte est enregistré correspondant à la reconnaissance vocale.

Ainsi est créée la structure de données SD en fonction des données de la carte SIM, cette structure SD étant stockée dans une zone de mémoire du terminal.

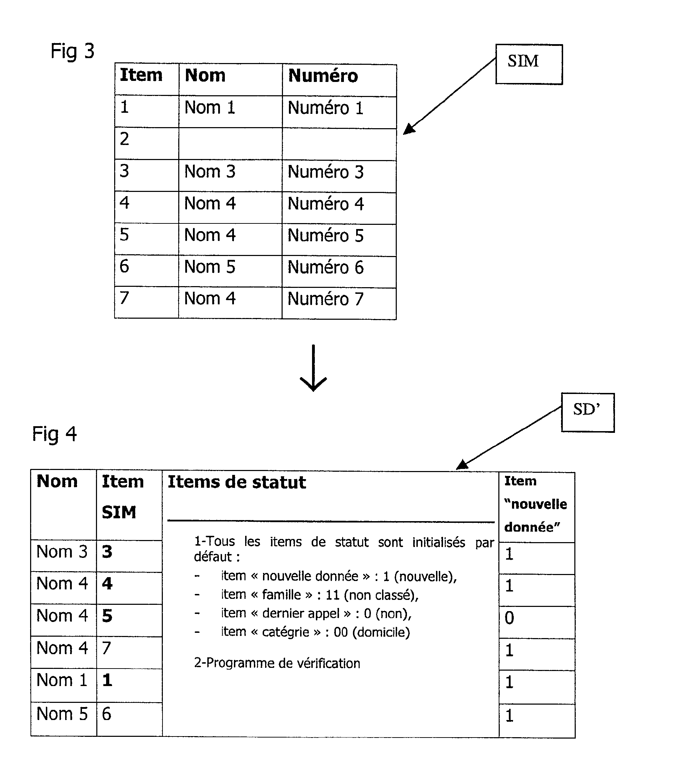

La structure de données étant enregistrée dans la mémoire du terminal, il doit être possible de la réactualiser en fonction de modifications des données de la carte SIM; c'est le cas par exemple quand la carte SIM est enlevée du terminal pour être utilisée sur un autre terminal et ses données en conséquence modifiées, des données pouvant être ajoutées et d'autres supprimées ; il faut alors lors de sa réinstallation sur le terminal d'origine réindexer la structure de données. Une telle modification de la carte SIM est schématisée sur la figure 3.

Dans le cas d'un simple déplacement de la carte SIM, le code IMSI de cette carte est celui enregistré dans la première structure de données, les identifiants de catégorie restent inchangés. Si une donnée n'a pas d'information de famille, il lui est donnée une valeur par défaut (non classé), dans les autres cas elles restent inchangées.

Dans le cas d'une insertion d'une nouvelle carte SIM avec un code IMSI différent, les informations enregistrées dans la première structure restent inchangées hormis le code IMSI. Si l'utilisateur souhaite classer un nom dans une famille ou associer plusieurs numéros à un nom, l'information est réindéxée et le module d'identité de l'abonné devient le module d'identité principal.

Selon l'invention, un programme de vérification de la cohérence est mis en fonction lorsqu'un déplacement de la carte SIM est détecté.

Ce programme de vérification lit tous les enregistrements du fichier SIM et vérifie si l'entrée existe ou non dans la structure de données. Une fois ce programme réalisé, la structure de données est modifiée pour être en concordance avec le fichier SIM, c'est-à-dire que tous les nouveaux enregistrements du module d'identité SIM sont ajoutés dans la structure de données et tous les enregistrements de la structure de données non trouvés dans le module SIM sont retirés de la structure de données.

Pour ce faire, une structure de données temporaire SD' est créée dans la mémoire de l'équipement, cette structure étant construite comme suit et schématisé sur la figure 4:
- Tous les items de la carte SIM avec les noms classés par ordre alphabétique sont lus ;
- La structure temporaire SD' reprend les items correspondants de la carte SIM après classement par ordre alphabétique;
- Tous les items de statut sont initialisés par défaut : item « nouvelle donnée » : 1 (nouvelle), item « famille » : 11 (non classé); item « dernier appel » : 0 (non), item « catégrie » : 00 (domicile) ;
- Pour chaque item de cette structure temporaire SD', l'on vérifie si l'item existe dans la liste de la structure de données SD;
- Si l'item n'existe pas dans la structure SD (figure 4 : item SIM = 7 et 6), rien n'est fait c'est-à-dire que les valeurs par défaut sont conservées (item « nouvelle donnée » = 1);
- Si l'item existe dans la structure SD (figure 4 : item SIM = 3, 4, 5, 1), l'item « nouvelle donnée » est testé :
   - si cet item est égal à 1 dans la structure SD (figure 4 : items SIM = 3, 4 et 1), alors les autres items sont modifiés comme suit : item « nouvelle donnée » : 1, item « famille » : item « famille » de la structure SD, item « dernier appel » : item « dernier appel de la structure SD, item « catégorie » : item « catégorie» de la structure SD ;
   - si cet item est égal à 0 dans la structure SD (figure 4 : item SIM = 5), alors le nom associé à l'item SIM (figure 4 : nom 4) et le nom associé à l'item SIM précédent (figure 4 : nom 4) sont lus;
   - si les deux noms sont identiques et si l'item précédent de la structure SD est identique à l'item SIM précédent, alors les items de statut de la structure SD' sont remplacés par les items de statut de la structure SD (figure 4 : item « nouvelle donnée » = 0);
   - si les deux noms ne sont pas identiques ou si l'item précédent de la structure SD n'est pas identique à l'item SIM précédent, rien n'est fait c'est-à-dire que les valeurs par défaut sont conservées.

Lorsque tous les items SIM ont été traités, la structure de données SD est remplacée par la structure de donnés SD' et la structure temporaire SD' est supprimée.

L'on obtient par ce procédé des données de 2 à 3 bytes dans la structure de données SD et une dimension de chaque structure de données inférieure ou égale à 512 bytes.

## Revendications

1. Procédé de gestion des données stockées dans la mémoire d'une carte SIM d'un équipement mobile comprenant un terminal de radiocommunication équipé d'une telle carte, procédé selon lequel au moins une structure de données est créée en fonction desdites données, **caractérisé en ce que** cette structure de données (SD) est stockée dans une zone de mémoire du terminal, et est indexée selon lesdites données de la carte SIM.

2. Procédé selon la revendication 1, **caractérisé en ce que** ladite structure de données (SD) est gérée dans ladite mémoire et organise les données stockées dans la carte SIM, cettedite structure de données (SD) comportant une liaison avec les identifiants enregistrés du module d'identité SIM et pour chacun de ceux-ci des informations additionnelles.

3. Procédé selon la revendication 2, **caractérisé en ce que** ladite structure de données (SD) comporte des identifiants indexés selon lesdites données de la carte SIM, et parmi celles-ci les noms classés par ordre alphabétique et leurs items SIM étant associés ainsi que d'autres identifiants.

4. Procédé selon la revendication 3, **caractérisé en ce que** ces identifiants sont :
• Item « nouvelle donnée » : code selon qu'il s'agisse de la même donnée SIM ou d'une nouvelle donnée ;
• Item « famille » : identifiant associé au nom : codes pour privé, pour professionnel, pour autre, pour non classé ;
• Item « dernier appel » : marquage du dernier numéro appelé avec la carte : codes pour non ou oui ;
• Item « catégorie » : identifiant associé aux différents numéros associés à un même nom : codes pour domicile, pour mobile, pour bureau ou pour réservé.

5. Procédé selon l'une des revendications précédentes, **caractérisé en ce qu'**un programme de vérification de la cohérence est mis en fonction lorsqu'un déplacement de la carte SIM est détecté.

6. Procédé selon la revendication 5, **caractérisé en ce que** ledit programme de vérification lit tous les enregistrements du fichier SIM et vérifie si l'entrée existe ou non dans ladite structure de données (SD), la structure de données (SD) étant modifiée pour être en concordance avec le fichier SIM.

7. Procédé selon la revendication 6, **caractérisé en ce que** ce programme de vérification comprend la création d'une structure de données temporaire (SD') destinée à remplacer ladite structure de données (SD), une fois toutes les données traitées.

8. Procédé selon la revendication 7, **caractérisé en ce que** cette structure de données temporaire (SD') est construite par comparaison de ses items et des items de ladite structure de données (SD), par initialisation des items par défaut, par lecture des items « nouvelle donnée » et par comparaison des noms et items associés.

9. Procédé selon la revendication 8, **caractérisé en ce que** cette structure de données temporaire (SD') comporte les étapes et tests suivants :
• La structure temporaire (SD') reprend les items correspondants de la carte SIM après classement par ordre alphabétique des noms;
• Tous les items de statut sont initialisés par défaut : item « nouvelle donnée » : code correspondant à nouvelle donnée, item « famille » : code correspondant à non classé; item « dernier appel» : code correspondant à non, item « catégorie » : code correspondant à domicile;
• Pour chaque item de cette structure (SD'), l'on vérifie si l'item existe dans la liste de la structure de données (SD);
• Si l'item n'existe pas dans la structure (SD), rien n'est fait c'est-à-dire que les valeurs par défaut sont conservées (item « nouvelle donnée » = 1);
• Si l'item existe dans la structure (SD), l'item « nouvelle donnée » est testé :
- si cet item est égal au code correspondant à nouvelle donnée dans la structure (SD), alors les autres items sont modifiés comme suit : item « nouvelle donnée » : code correspondant à nouvelle donnée, item « famille » : item «famille » de la structure (SD), item « dernier appel» : item « dernier appel de la structure (SD), item « catégorie » : item « catégorie » de la structure (SD) ;
- si cet item est égal au code correspondant à même donnée dans la structure (SD), alors l'on lit le nom associé à l'item SIM et le nom associé à l'item SIM précédent;
- si les deux noms sont identiques et si l'item précédent de la structure (SD) est identique à l'item SIM précédent, alors les item de statut de la structure temporaire (SD') sont remplacés par les item de statut de la structure (SD) ;
- si les deux noms ne sont pas identiques ou si l'item précédent de la structure (SD) n'est pas identique à l'item SIM précédent, rien n'est fait c'est-à-dire que les valeurs par défaut sont conservées.

10. Equipement mobile comprenant un terminal de radiocommunication équipé d'une carte SIM, des données étant stockées dans une mémoire de la carte SIM, **caractérisé en ce qu'**il comporte :
- des moyens pour créer au moins une structure de données relative auxdites données de la carte SIM, dans une zone de mémoire du terminal de radiocommunication, et
- des moyens d'indexation de cette structure de données (SD) selon lesdites données de la carte SIM.
